(19) Europäisches Patentamt / European Patent Office / Office européen des brevets

(11) **EP 3 901 580 A1**

(12) **EUROPEAN PATENT APPLICATION**
published in accordance with Art. 153(4) EPC

(43) Date of publication:
**27.10.2021 Bulletin 2021/43**

(21) Application number: **18943973.0**

(22) Date of filing: **20.12.2018**

(51) Int Cl.:
*G01C 21/20* (2006.01)      *G08G 3/00* (2006.01)
*B63H 25/04* (2006.01)      *B63H 21/21* (2006.01)

(86) International application number:
**PCT/JP2018/047100**

(87) International publication number:
**WO 2020/129225 (25.06.2020 Gazette 2020/26)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Fujitsu Limited**
**Kawasaki-shi, Kanagawa 211-8588 (JP)**

(72) Inventors:
• **YAMAUMI, Masashi**
  **Kawasaki-shi, Kanagawa 211-8588 (JP)**
• **IKEDA, Takuro**
  **Kawasaki-shi, Kanagawa 211-8588 (JP)**
• **ANAN, Taizo**
  **Kawasaki-shi, Kanagawa 211-8588 (JP)**

(74) Representative: **Hoffmann Eitle**
**Patent- und Rechtsanwälte PartmbB**
**Arabellastraße 30**
**81925 München (DE)**

(54) **NAVIGATION ASSISTANCE METHOD, NAVIGATION ASSISTANCE DEVICE, AND NAVIGATION ASSISTANCE PROGRAM**

(57)     A navigation support device (1): classifies vessel voyage data according to each meteorological and hydrographic condition; calculates characteristic distribution of vessel maneuvering for each meteorological and hydrographic condition, using the vessel voyage data that has been classified; extracts a plurality of vessel maneuvering patterns from the characteristic distribution of vessel maneuvering that has been calculated for each meteorological and hydrographic condition, and aggregates the vessel voyage data for each of the vessel maneuvering patterns; and generates a learning model for each of the vessel maneuvering patterns from the vessel voyage data aggregated for each of the vessel maneuvering patterns, using meteorological and hydrographic actual data as an explanatory variable and vessel performance as an objective variable, thereby being able to accurately recommend an optimal route according to a vessel maneuvering pattern.

FIG. 8

EP 3 901 580 A1

**Description**

TECHNICAL FIELD

The present invention relates to a navigation support method and the like.

BACKGROUND ART

Navigation support technologies are disclosed.

In one example, based on vessel voyage data and past meteorological and hydrographic data in a sea area where a vessel is to navigate, statistical values of a navigation speed required for the navigation and a fuel consumption amount due to the navigation are calculated in consideration of the influence of meteorological and hydrographic phenomena on the navigation when the vessel navigates in this sea area, and a time or a fuel consumption amount required for the navigation of the vessel is reasonably estimated using the statistical values (see, for example, Patent Document 1). The navigation speed and fuel consumption amount mentioned here refer to the performance of the vessel.

Furthermore, in another example, statistical data obtained by statistically processing past meteorological and hydrographic data in an area including the departure place and a desired value of the route of the vessel is calculated, and an optimal route from the departure place to the desired value is computed based on the statistical data and navigation performance data of the vessel (see, for example, Patent Document 2).

For example, in the navigation support technologies, the performance of a vessel is estimated based on vessel voyage data and past meteorological and hydrographic data, and an optimal route for this vessel is computed based on the estimated performance of the vessel and meteorological and hydrographic data.

CITATION LIST

PATENT DOCUMENT

Patent Document 1: Japanese Patent No. 6281022
Patent Document 2: Japanese Laid-open Patent Publication No. 2013-134089

SUMMARY OF INVENTION

TECHNICAL PROBLEM

Incidentally, in the actual navigation, the captain of a vessel selects a route with low wind and wave resistance at a normal output prescribed at the time of designing the vessel. The normal output mentioned here is an output that is normally used to obtain navigation velocity, and refers to an economical output from the viewpoint of engine efficiency and maintenance. A route selected at the normal output is deemed as a route that requires less fuel expense and takes less time.

However, the conventional navigation support technologies have a disadvantage that it is not possible to accurately recommend an optimal route at the normal output. For example, in the conventional navigation support technologies, the performance of the vessel is estimated using all the vessel voyage data including a voyage in deceleration in which a voyage is intentionally made in deceleration other than the normal output, and the like, and it is thus difficult to accurately recommend an optimal route at the normal output, which is regularly selected by the captain.

Furthermore, even when using only the vessel voyage data at the normal output is attempted, since vessel maneuvering by the captain varies in a complicated manner depending on the meteorological and hydrographic conditions, it is difficult to discriminate which part of the vessel voyage data corresponds to data at the normal output.

Note that the above-mentioned problem is a problem that arises not only in the normal output but also in other vessel maneuvering patterns similarly, such as a medium output that does not impose a load on the engine and a small output for reducing the fuel expense.

In one mode, an object of the present invention is to accurately recommend an optimal route according to a vessel maneuvering pattern.

SOLUTION TO PROBLEM

In one aspect, in a navigation support method, a computer executes processing including: classifying vessel voyage data according to each meteorological and hydrographic condition; calculating characteristic distribution of vessel maneuvering for each meteorological and hydrographic condition, using the vessel voyage data that has been classified; extracting a plurality of vessel maneuvering patterns from the characteristic distribution of vessel maneuvering that has been calculated for each meteorological and hydrographic condition, and aggregating the vessel voyage data for each of the vessel maneuvering patterns; and generating a learning model for each of the vessel maneuvering patterns from the vessel voyage data aggregated for each of the vessel maneuvering patterns, using meteorological and hydrographic actual data as an explanatory variable and vessel performance as an objective variable.

ADVANTAGEOUS EFFECTS OF INVENTION

According to one aspect of embodiment, an optimal route according to a vessel maneuvering pattern can be accurately recommended.

BRIEF DESCRIPTION OF DRAWINGS

FIG. 1 is a functional block diagram illustrating a configuration of a navigation support device according to an embodiment.
FIG. 2 is a diagram illustrating an outline of navigation support according to the embodiment.
FIG. 3 is a diagram illustrating an example of voyage data according to the embodiment.
FIG. 4 is a diagram illustrating an example of meteorological/hydrographic data according to the embodiment.
FIG. 5 is a diagram illustrating an example of voyage data classification processing according to the embodiment.
FIG. 6 is a diagram illustrating an example of voyage data aggregation processing according to the embodiment.
FIG. 7 is a diagram illustrating an example of correction processing for voyage data for each pattern according to the embodiment.
FIG. 8 is a diagram illustrating an example of performance estimation model generation processing according to the embodiment.
FIG. 9 is a diagram illustrating an idea of the performance estimation model generation processing according to the embodiment.
FIG. 10 is a diagram illustrating an example of performance estimation processing and optimal route search processing according to the embodiment.
FIG. 11 is a diagram illustrating an example of an optimal route search result according to the embodiment.
FIG. 12 is a diagram illustrating an example of a flowchart of a model learning phase according to the embodiment.
FIG. 13 is a diagram illustrating a usage example of navigation support processing according to the embodiment.
FIG. 14 is a diagram illustrating an example of a computer that executes a navigation support program.

DESCRIPTION OF EMBODIMENTS

Hereinafter, embodiments of a navigation support method, a navigation support device, and a navigation support method disclosed in the present application will be described in detail with reference to the drawings. Note that the present invention is not limited to the embodiments.

[Embodiments]

[Configuration of Navigation Support Device]

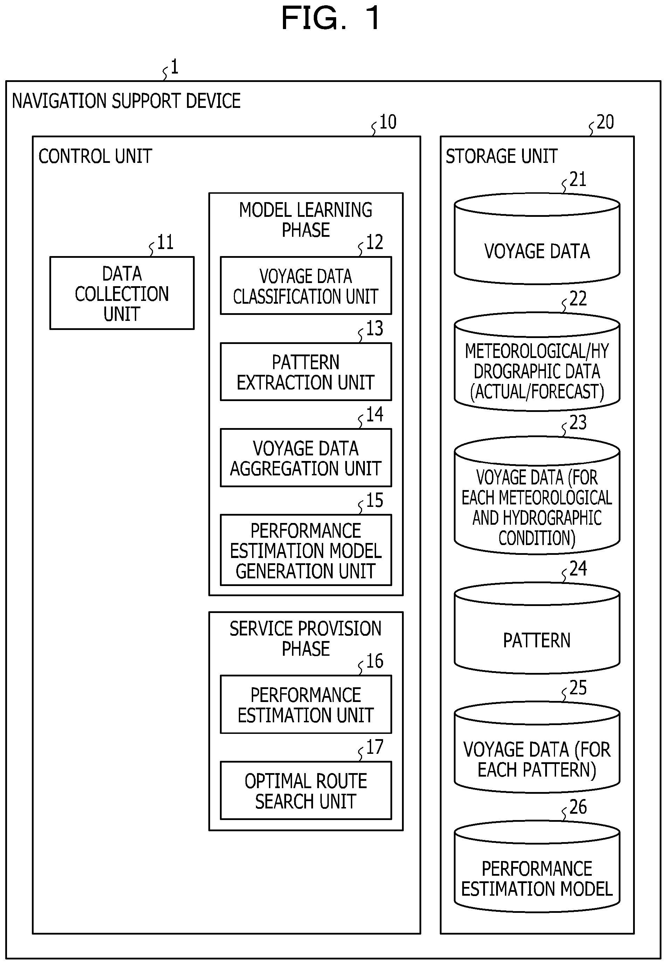

FIG. 1 is a functional block diagram illustrating a configuration of a navigation support device according to an embodiment. As illustrated in FIG. 1, the navigation support device 1 classifies vessel navigation data according to each meteorological and hydrographic condition, and calculates the distribution of vessel speed for each meteorological and hydrographic condition used for the classification. The navigation support device 1 aggregates the vessel voyage data for each vessel maneuvering pattern extracted from vessel maneuvering distribution calculated for each meteorological and hydrographic condition used for the classification. The navigation support device 1 learns the vessel performance using the aggregated vessel voyage data and past meteorological and hydrographic data for each vessel maneuvering pattern, and constructs an estimation model for the vessel performance for each vessel maneuvering pattern.
The vessel performance mentioned here includes the navigation speed, fuel consumption amount, and the like of the vessel.
The vessel maneuvering pattern mentioned here refers to a pattern that the captain actually selects when maneuvering the vessel. As the vessel maneuvering pattern, for example, "pattern a" in which the vessel is maneuvered at a normal output, "pattern b" in which the vessel is maneuvered with the engine output slightly lowered, "pattern c" in which the vessel is maneuvered on a voyage in deceleration, and the like are assumed. Hereinafter, the vessel maneuvering pattern is sometimes simply referred to as "pattern".

"Pattern a" is a pattern in which a vessel is maneuvered by selecting a route with low wind and wave resistance at a normal output prescribed at the time of designing the vessel. "Normal output" refers to an economical output from the viewpoint of engine efficiency and maintenance. A route selected at the normal output is deemed as a route that requires less fuel expense and takes less time. The pattern a is referred to as a vessel maneuvering pattern at the normal output.

"Pattern b" is a pattern in which a vessel is maneuvered by lowering the output so as not to impose a load on the engine (not to cause a torque-rich phenomenon) under stormy weather. The pattern b is referred to as a vessel maneuvering pattern at a medium output. "Pattern c" is a pattern in which a vessel is decelerated and maneuvered in order to reduce fuel expense when there is no next navigation schedule and there is time to spare. The pattern c is referred to as a vessel maneuvering pattern at a small output. Note that the vessel maneuvering patterns are not limited to these patterns. As an example, the vessel maneuvering patterns may include a pattern d in which a vessel is maneuvered by increasing the output so as to impose a load on the engine when there is no time to spare. The pattern d is referred to as a vessel maneuvering pattern at a high output.

[Outline of Navigation Support]

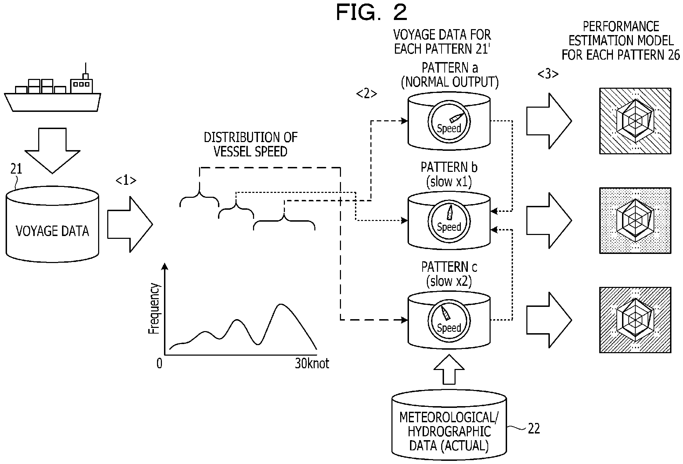

Here, an outline of navigation support according to the embodiment will be described with reference to FIG. 2. FIG. 2 is a diagram illustrating an outline of navigation support according to the embodiment.

As illustrated in FIG. 2, the navigation support device 1 calculates the distribution of vessel speed from voyage data 21 relating to the vessel, and extracts a vessel maneuvering pattern (pattern) from the distribution of vessel speed (<1>). The distribution of vessel speed indicates the frequency distribution of vessel speed. Here, the pattern is extracted based on the frequency of occurrence. A section with the highest frequency of occurrence is extracted as the pattern a at the normal output. This is because the captain often selects a route with low wind and wave resistance to navigate at the normal output prescribed at the time of designing the vessel. A section with the next highest frequency of occurrence is extracted as the pattern b at the medium output. A section with the slowest vessel speed is extracted as the pattern c at the small output. Note that the distribution may be derived from engine speed or horsepower instead of vessel speed.

Then, the navigation support device 1 obtains voyage data 21' by aggregation for each pattern (<2>).

Subsequently, the navigation support device 1 learns the vessel performance using the voyage data 21' aggregated for each pattern and actual meteorological/hydrographic data (actual/forecast) 22, and constructs an estimation model for the vessel performance for each pattern (<3>). This allows the navigation support device 1 to estimate the optimal route that suits the captain's sense by learning the vessel maneuvering actually performed by the captain.

Returning to FIG. 1, the navigation support device 1 includes a control unit 10 and a storage unit 20.

The control unit 10 corresponds to an electronic circuit such as a central processing unit (CPU). Then, the control unit 10 includes an internal memory for storing programs defining various processing procedures and control data, and executes a variety of types of processing using the programs and the control data. The control unit 10 includes a data collection unit 11, a voyage data classification unit 12, a pattern extraction unit 13, a voyage data aggregation unit 14, a performance estimation model generation unit 15, a performance estimation unit 16, and an optimal route search unit 17. Note that the voyage data classification unit 12, the pattern extraction unit 13, the voyage data aggregation unit 14, and the performance estimation model generation unit 15 are functional units for a model learning phase. Furthermore, the performance estimation unit 16 and the optimal route search unit 17 are functional units for a service provision phase. In addition, the voyage data classification unit 12 is an example of a classification unit. The pattern extraction unit 13 is an example of an extraction unit. The voyage data aggregation unit 14 is an example of a calculation unit and an aggregation unit. The performance estimation model generation unit is an example of a generation unit.

For example, the storage unit 20 is a semiconductor memory element such as a random access memory (RAM) or a flash memory, or a storage device such as a hard disk or an optical disc. The storage unit 20 has the voyage data 21, the meteorological/hydrographic data (actual/forecast) 22, voyage data (for each meteorological and hydrographic condition) 23, a pattern 24, voyage data (for each pattern) 25, and a performance estimation model 26.

The voyage data 21 is data indicating, for example, when, where, at what speed, and in which direction the vessel was heading during voyage. In different terms, the voyage data 21 is data indicating the history of vessel maneuvering performed by the captain of the vessel. For example, the voyage data 21 is collected using an automatic identification system (AIS), a voyage data recorder (VDR), an engine logger, and the like.

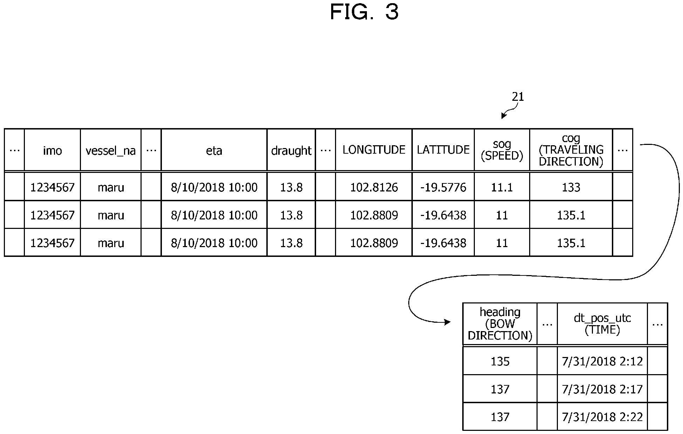

Here, an example of the voyage data 21 will be described with reference to FIG. 3. FIG. 3 is a diagram illustrating an example of the voyage data according to the embodiment. As illustrated in FIG. 3, the voyage data 21 stores the latitude, longitude, speed, traveling direction,..., bow direction, time,..., for each versel_name in association with each other. The item versel_name indicates the name of the vessel. Note that the voyage data 21 is not limited to this example, and the engine speed and consumed fuel may be further added.

Returning to FIG. 1, the meteorological/hydrographic data (actual/forecast) 22 includes meteorological data and hydrographic data including the actual results and forecasts for the vessel. The meteorological/hydrographic data (actual/forecast) 22 can be collected using, for example, data delivered from a weather forecast data provider.

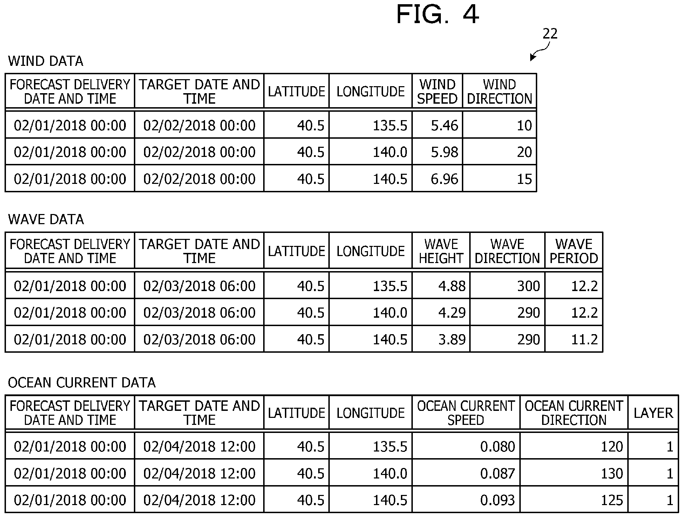

Here, an example of meteorological/hydrographic data (actual/forecast) 22 will be described with reference to FIG. 4. FIG. 4 is a diagram illustrating an example of meteorological/hydrographic data according to the embodiment. The upper figure in FIG. 4 represents forecast wind data in the meteorological data. The middle figure in FIG. 4 represents forecast wave data in the hydrographic data. The lower figure in FIG. 4 represents forecast ocean current data in the hydrographic data.

As illustrated in the upper figure in FIG. 4, the wind data stores the latitude, longitude, wind speed, and wind direction in association with the forecast delivery date and time and the target date and time. As illustrated in the middle figure in FIG. 4, the wave data stores the latitude, longitude, wave height, wave direction, and wave period in association with the forecast delivery date and time and the target date and time. As illustrated in the lower figure in FIG. 4, the ocean current data stores the latitude, longitude, ocean current speed, ocean current direction, and layer in association with the forecast delivery date and time and the target date and time.

Returning to FIG. 1, the voyage data (for each meteorological and hydrographic condition) 23 is voyage data obtained by classifying the voyage data 21 according to each meteorological and hydrographic condition. Note that the voyage data (for each meteorological and hydrographic condition) 23 is classified by the voyage data classification unit 12.

The pattern 24 is a vessel maneuvering pattern extracted from a plurality of vessel maneuvering patterns. Note that the pattern 24 is extracted by the pattern extraction unit 12.

The voyage data (for each pattern) 25 is voyage data obtained by aggregating the voyage data 21 for each pattern. Note that the voyage data (for each pattern) 25 is aggregated by the voyage data aggregation unit 14.

The performance estimation model 26 is an estimation model for the vessel performance for each pattern. Note that the performance estimation model 26 is generated by the performance estimation model generation unit 15.

The data collection unit 11 collects various types of data. For example, the data collection unit 11 collects the voyage data 21 using an AIS. The data collection unit 11 receives the meteorological data (actual/forecast) and the hydrographic data (actual/forecast) delivered from the weather forecast data provider, and collects the meteorological/hydrographic data (actual/forecast) 22.

The voyage data classification unit 12 classifies the voyage data 21 according to each meteorological and hydrographic condition.

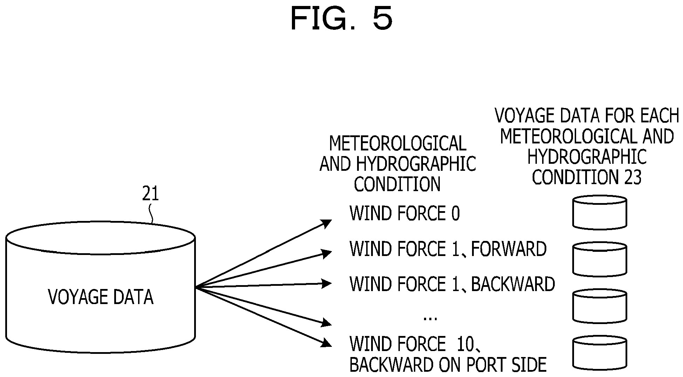

Here, an example of voyage data classification will be described with reference to FIG. 5. FIG. 5 is a diagram illustrating an example of voyage data classification processing according to the embodiment. As illustrated in FIG. 5, the voyage data classification unit 12 classifies the voyage data 21 according to each meteorological and hydrographic condition assigned in advance, and generates the voyage data 23 for each meteorological and hydrographic condition. The case indicated here is a case where the wind speed and the wind direction are applied as meteorological and hydrographic conditions. As an example of meteorological and hydrographic conditions, a case where the wind force is "0", a case where the wind force is "1" and forward, a case where the wind force is "1" and backward,..., and a case where the wind force is "10" and backward on the port side are illustrated. The voyage data 21 is classified according to each of such meteorological and hydrographic conditions into the voyage data 23 for each meteorological and hydrographic condition.

The pattern extraction unit 13 clusters vessel speed data of the voyage data 23 for each meteorological and hydrographic condition, and extracts the vessel maneuvering pattern (pattern). For example, the pattern extraction unit 13 clusters the vessel speed data using data including at least the position (latitude and longitude), time, and vessel speed during voyage in the voyage data 23 for each meteorological and hydrographic condition. For clustering, the k-means method or the like can be used as an example. Then, as a result of clustering, the pattern extraction unit 13 extracts, as an example, a vessel maneuvering pattern (pattern a) at the normal output, a vessel maneuvering pattern (pattern b) at the medium output, a vessel maneuvering pattern (pattern c) at the small output, and the like. Subsequently, the pattern extraction unit 13 saves the extracted patterns in the pattern 24. Note that the pattern extraction unit 13 has been described to cluster the vessel speed data of the voyage data 23 for each meteorological and hydrographic condition to extract patterns, but is not limited to this example. The engine speed or horsepower may be used instead of the vessel speed data to perform clustering and extract patterns.

Returning to FIG. 1, the voyage data aggregation unit 14 calculates the distribution of vessel speed using the voyage data 23 for each meteorological and hydrographic condition. The distribution of vessel speed mentioned here refers to, for example, the distribution of frequency of occurrence of vessel speed. For example, the voyage data aggregation unit 14 calculates the distribution of frequency of occurrence of vessel speed with respect to the voyage data 23 for each meteorological and hydrographic condition.

Furthermore, the voyage data aggregation unit 14 divides the distribution into sections based on the frequency of occurrence in the distribution of vessel speed calculated for each meteorological and hydrographic condition. The divided sections are associated with the vessel maneuvering patterns. This allows the voyage data aggregation unit 14 to regard a section of vessel speed with the highest frequency of occurrence as the vessel maneuvering pattern at the normal output, by calculating the frequency of occurrence of vessel speed under the same meteorological and hydrographic condition. In other words, this is because it is assumed that the captain often selects the normal output, which is an economical output, when maneuvering a vessel. Similarly, the voyage data aggregation unit 14 can regard a section of the distribution obtained from the frequency of occurrence and the vessel speed, as a predetermined vessel maneuvering pattern, by calculating the frequency of occurrence of vessel speed under the same meteorological and hydrographic condition.

Furthermore, the voyage data aggregation unit 14 aggregates the voyage data 23 for each meteorological and hydrographic condition for each vessel maneuvering pattern, and generates the voyage data 25 for each vessel maneuvering pattern.

Note that the voyage data aggregation unit 14 may correct the voyage data 25 for each vessel maneuvering pattern when obtaining the voyage data 25 for each vessel maneuvering pattern by aggregation. For example, the voyage data aggregation unit 14 designates the vessel maneuvering pattern based on the frequency of occurrence of vessel speed for the same meteorological and hydrographic condition. However, if the voyage data aggregation unit 14 designates the vessel maneuvering pattern only according to the vessel speed, aggregation will result in the vessel maneuvering pattern to be switched in a very short period of time, but in reality, the vessel maneuvering pattern is not switched in a very short period of time. Accordingly, when the duration period of a vessel maneuvering pattern is within a predetermined period of time, it is desirable for the voyage data aggregation unit 14 to correct the voyage data of the vessel maneuvering pattern by employing a most frequent vessel maneuvering pattern contained in a predetermined period of time as a vessel maneuvering pattern for that period of time.

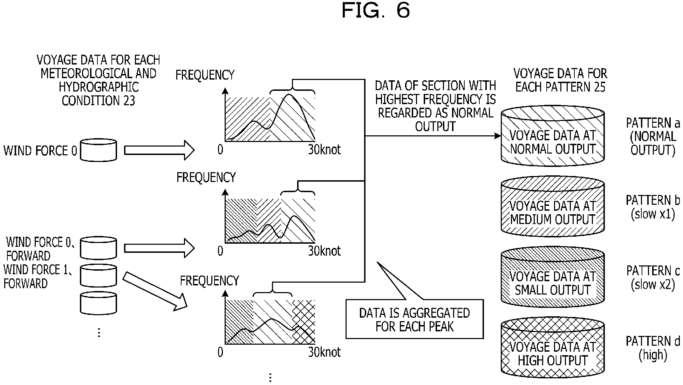

Here, an example of voyage data aggregation will be described with reference to FIG. 6. FIG. 6 is a diagram illustrating an example of voyage data aggregation processing according to the embodiment. FIG. 6 describes a case where the voyage data aggregation unit 14 aggregates the voyage data 23 for each meteorological and hydrographic condition with respect to the vessel maneuvering pattern at the normal output, and generates the voyage data 25 of the vessel maneuvering pattern at the normal output.

The voyage data aggregation unit 14 calculates a frequency distribution table of each vessel speed, using the voyage data 23 for each meteorological and hydrographic condition.

Then, the voyage data aggregation unit 14 divides the distribution into sections based on the frequency of occurrence in the calculated frequency distribution table of vessel speed. Here, a section of vessel speed with the highest frequency of occurrence is regarded as the vessel maneuvering pattern at the normal output. This is because it is assumed that the captain often selects the normal output, which is an economical output, when maneuvering a vessel.

Then, the voyage data aggregation unit 14 aggregates the voyage data 23 for each meteorological and hydrographic condition, and generates the voyage data 25 of the vessel maneuvering pattern at the normal output. Here, a section of vessel speed with the highest frequency of occurrence is regarded as the vessel maneuvering pattern at the normal output. Accordingly, the voyage data aggregation unit 14 aggregates the voyage data of the section of vessel speed with the highest frequency of occurrence from the respective frequency distribution tables calculated for each meteorological and hydrographic condition, and generates the voyage data 25 of the vessel maneuvering pattern at the normal output.

Note that a section of vessel speed with the next highest frequency of occurrence may be employed as the vessel maneuvering pattern at the medium output. In such a case, the voyage data aggregation unit 14 aggregates the voyage data of the section of the distribution of vessel speed with the next highest frequency of occurrence from the respective frequency distribution tables calculated for each meteorological and hydrographic condition, and generates the voyage data 25 of the vessel maneuvering pattern at the medium output. Furthermore, a section of the distribution with the slowest vessel speed may be employed as the vessel maneuvering pattern at the small output. In such a case, the voyage data aggregation unit 14 aggregates the voyage data of the section of the distribution with the slowest vessel speed from the respective frequency distribution tables calculated for each meteorological and hydrographic condition, and generates the voyage data 25 of the vessel maneuvering pattern at the small output. Furthermore, a section of the distribution with the fastest vessel speed may be employed as the vessel maneuvering pattern at the high output. In such a case, the voyage data aggregation unit 14 aggregates the voyage data of the section of the distribution with the fastest vessel speed from the respective frequency distribution tables calculated for each meteorological and hydrographic condition, and generates the voyage data 25 of the vessel maneuvering pattern at the high output.

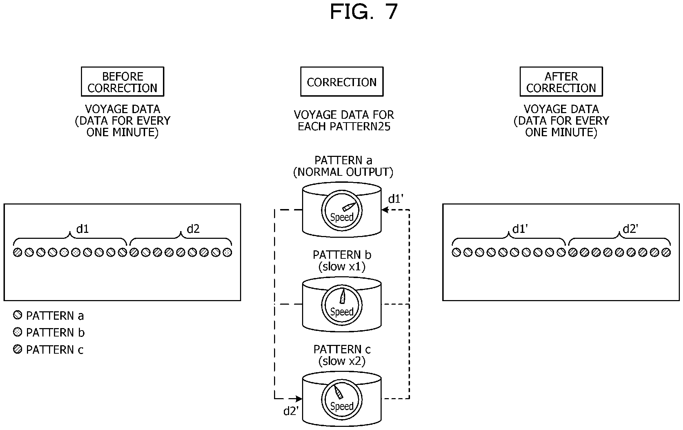

FIG. 7 is a diagram illustrating an example of correction processing for the voyage data for each pattern according to the embodiment. In FIG. 7, it is supposed that the voyage data aggregation unit 14 has generated the voyage data 25 for each vessel maneuvering pattern, such as the pattern a (normal output), the pattern b, and the pattern c.

As illustrated in FIG. 7, the voyage data for every one minute before correction is represented. Each piece of the voyage data switches the vessel maneuvering pattern based on the frequency of occurrence of vessel speed.

However, if the voyage data aggregation unit 14 designates the vessel maneuvering pattern only according to the vessel speed, the vessel maneuvering pattern will be switched in a very short period of time, but in reality, the vessel maneuvering pattern is not switched in a very short period of time. Accordingly, when the duration time of a vessel maneuvering pattern is within a predetermined period of time, the voyage data aggregation unit 14 corrects the voyage data of the vessel maneuvering pattern by employing a most frequent vessel maneuvering pattern contained in a predetermined period of time as a vessel maneuvering pattern for that period of time. Here, since the pattern a is the most frequent among respective pieces of voyage data denoted by the reference sign d1, the respective pieces of voyage data are corrected as the voyage data of the most frequent pattern a, as indicated by the reference sign d1'. For example, the voyage data aggregation unit 14 corrects the voyage data of the pattern c and the voyage data of the pattern b to the voyage data of the pattern a. Furthermore, since the pattern c is the most frequent among respective pieces of voyage data denoted by the reference sign d2, the respective pieces of voyage data are corrected as the voyage data of the most frequent pattern c, as indicated by the reference sign d2'. For example, the voyage data aggregation unit 14 corrects the voyage data of the pattern a and the voyage data of the pattern b to the voyage data of the pattern c. This allows the voyage data aggregation unit 14 to aggregate the voyage data for each vessel maneuvering pattern in a realistic manner.

Returning to FIG. 1, the performance estimation model generation unit 15 learns the vessel performance using the aggregated voyage data 25 and the actual meteorological/hydrographic data 22 for each vessel maneuvering pattern, and generates an estimation model for the vessel performance. For example, the performance estimation model generation unit 15 generates the performance estimation model 26 for each vessel maneuvering pattern, using the actual meteorological/hydrographic data 22 as an explanatory variable and the vessel performance according to the voyage data 25 aggregated for each vessel maneuvering pattern as an objective variable. As an example, the performance estimation model generation unit 15 generates the performance estimation model 26 for each vessel maneuvering pattern by the least squares method with the multiple regression equation in following equation (1). Note that y in equation (1) is an objective variable, and indicates, for example, the vessel speed. Each of $x_1$ to $x_6$ in equation (1) is an explanatory variable, and indicates, for example, the wind speed, wind direction, wave height, wave direction, ocean current speed, and ocean current direction.

$$y = \beta_0 + \beta_1 x_1 + \beta_2 x_2 + \beta_3 x_3 + \beta_4 x_4 + \beta_5 x_5 + \beta_6 x_6 \ldots \text{Equation (1)}$$

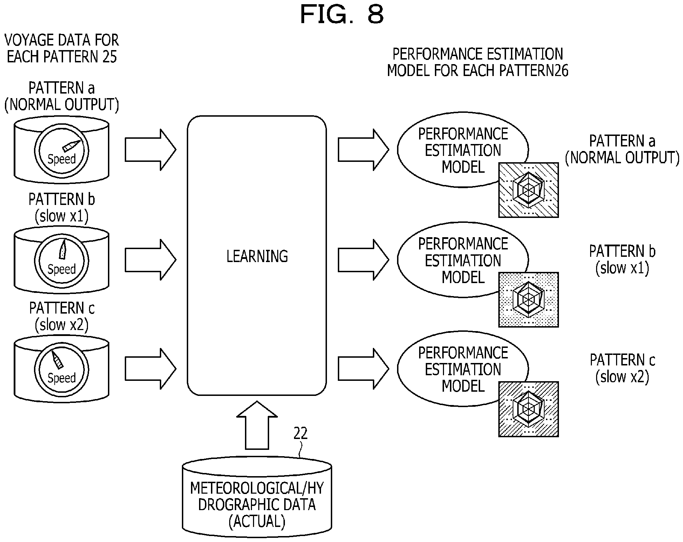

Here, an example of performance estimation model generation according to the embodiment will be described with reference to FIG. 8. FIG. 8 is a diagram illustrating an example of performance estimation model generation processing according to the embodiment. As illustrated in FIG. 8, the performance estimation model generation unit 15 learns the vessel performance using the aggregated voyage data 25 and the actual meteorological/hydrographic data 22 for each vessel maneuvering pattern, and generates an estimation model for the vessel performance. Here, the voyage data 25 for each of the pattern a, pattern b, and pattern c vessel maneuvering patterns has been aggregated. The performance estimation model generation unit 15 learns the vessel performance using, for example, "wind speed" in the actual meteorological/hydrographic data 22 as an explanatory variable and, for example, "vessel speed" in the voyage data 25 of the pattern a as an objective variable, and generates the performance estimation model 26 for the pattern a. The performance estimation model generation unit 15 learns the vessel performance using, for example, "wind speed" in the actual meteorological/hydrographic data 22 as an explanatory variable and, for example, "vessel speed" in the voyage data 25 of the pattern b as an objective variable, and generates the performance estimation model 26 for the pattern b. The performance estimation model generation unit 15 learns the vessel performance using, for example, "wind speed" in the actual meteorological/hydrographic data 22 as an explanatory variable and, for example, "vessel speed" in the voyage data 25 of the pattern c as an objective variable, and generates the performance estimation model 26 for the pattern c.

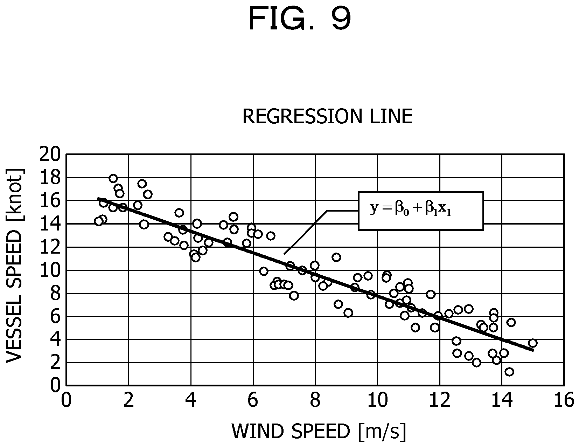

Here, an idea of the performance estimation model generation processing according to the embodiment will be described with reference to FIG. 9. FIG. 9 is a diagram illustrating an idea of the performance estimation model generation processing according to the embodiment. Note that FIG. 9 describes a case where a performance estimation model when the vessel maneuvering pattern is the pattern a at the normal output is to be generated. For convenience of explanation, only "wind speed" is employed as the explanatory variable.

As illustrated in FIG. 9, the performance estimation model generation unit 15 works out a regression line from two-dimensional coordinates when the x-axis denotes "wind speed" and the y-axis denotes "vessel speed". Here, the performance estimation model generation unit 15 searches the voyage data 25 of the pattern a and the actual meteorological/hydrographic data 22 for "vessel speed" and "wind speed" at the same time and the same position (latitude and longitude), and samples "vessel speed" and "wind speed" found by the search in the two-dimensional coordinates. Then, the performance estimation model generation unit 15 works out a regression line by the least squares method with a plurality of the sampled points.

For example, the performance estimation model generation unit 15 works out parameters $\beta_0$ and $\beta_1$ that minimize equation (2), and works out a regression line $y = \beta_0 + \beta_1 x_1$.

[Equation 1]

$$\sum_{i=1}^{n} \left( y_i - \left( \beta_1 x_{1_i} + \beta_0 \right) \right)^2 \quad \cdots (2)$$

Note that, in FIG. 9, for convenience of explanation, only "wind speed" is employed as the explanatory variable, but the explanatory variable is not limited to this example. For example, when "wind speed" and "wind direction" are employed as the explanatory variables, the performance estimation model generation unit 15 only needs to work out the regression line $y = \beta_0 + \beta_1 x_1 + \beta_2 x_2$ from three-dimensional coordinates when the x-axis denotes "wind speed", the y-axis denotes "wind direction", and the z-axis denotes "vessel speed". Furthermore, in FIG. 9, "vessel speed" is employed as the objective variable, but the objective variable is not limited to this example. For example, "fuel consumption" may be employed as the objective variable.

Returning to FIG. 1, the performance estimation unit 16 estimates the vessel performance of the specified vessel maneuvering pattern from the forecast meteorological/hydrographic data 22 and the performance estimation model 26. For example, when accepting the specification of the vessel maneuvering pattern, the performance estimation unit 16 acquires the performance estimation model 26 corresponding to the vessel maneuvering pattern. The performance estimation unit 16 estimates the vessel performance at the target position (latitude and longitude) using the acquired performance estimation model 26 and the forecast meteorological/hydrographic data 22. The vessel performance mentioned here refers to the vessel speed and fuel consumption.

The optimal route search unit 17 searches for an optimal route for the vessel based on the vessel performance estimated by the performance estimation unit 16. For example, the optimal route search unit 17 accepts navigation conditions of a vessel. As an example, the navigation conditions of a vessel includes the departure place, arrival place, departure time, and vessel maneuvering pattern. The optimal route search unit 17 searches for an optimal route for a section from the departure place to the arrival place when departure is made at the specified departure time and the specified vessel maneuvering pattern is selected. As an example, the optimal route search unit 17 searches for the optimal route based on the estimated vessel performance at each position (latitude and longitude) included in the section. Any conventional technology may be used to search for the optimal route, as long as the estimated vessel performance is used.

Furthermore, the optimal route search unit 17 saves the optimal route in the specified vessel maneuvering pattern in the storage unit 20 as the optimal route search result.

Note that the optimal route is a route that consumes less fuel and takes less time in operation in each selected vessel maneuvering pattern. For example, when the vessel maneuvering pattern is the pattern a at the normal output, the optimal route is a route that consumes less fuel and takes less time when making a voyage in the pattern a. The same applies to a case where the vessel maneuvering pattern is the pattern b at the medium output and a case where the vessel maneuvering pattern is the pattern c at the small output.

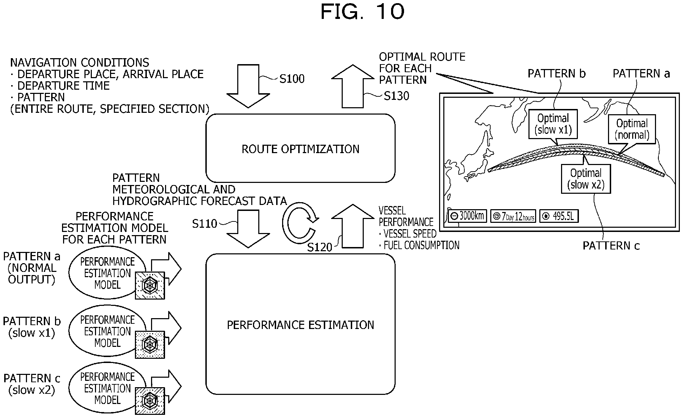

Here, an example of performance estimation processing and optimal route search processing according to the embodiment will be described with reference to FIG. 10. FIG. 10 is a diagram illustrating an example of the performance estimation processing and the optimal route search processing according to the embodiment.

As illustrated in FIG. 10, the optimal route search unit 17 accepts the departure place, the arrival place, the departure time, and the vessel maneuvering pattern as navigation conditions for the vessel (S100). The optimal route search unit 17 makes an inquiry about the vessel performance (for example, the vessel speed) when the vessel is maneuvered in the accepted vessel maneuvering pattern for each position (latitude and longitude) included in the section from the departure place to the arrival place (S110).

When accepting the specification of the vessel maneuvering pattern and the target position, the performance estimation unit 16 acquires the performance estimation model 26 corresponding to the vessel maneuvering pattern. The performance estimation unit 16 estimates the vessel performance (for example, the vessel speed) at the target position (latitude and longitude) using the acquired performance estimation model 26 and the forecast meteorological/hydrographic data 22. Then, the performance estimation unit 16 feeds back with the estimated vessel performance (for example, the vessel speed) (S120). The performance estimation unit 16 repeatedly estimates the vessel performance for all the specified target positions, and feeds back with the estimated vessel performance.

Subsequently, the optimal route search unit 17 searches for an optimal route in the accepted vessel maneuvering pattern, based on the estimated vessel performance (for example, the vessel speed) at each position (latitude and longitude) included in the section (S130) . Here, the optimal route for each vessel maneuvering pattern is represented.

The optimal route whose vessel maneuvering pattern is the pattern a at the normal output is the route indicated by Optimal (normal). The optimal route whose vessel maneuvering pattern is the pattern b at the medium output is the route indicated by Optimal (slow x1). The optimal route whose vessel maneuvering pattern is the pattern c at the small output is the route indicated by Optimal (slow x2) .

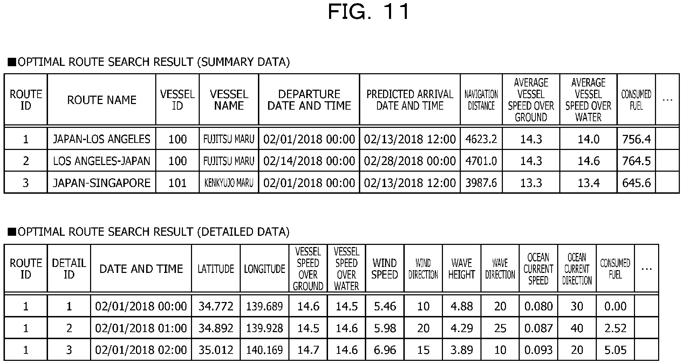

FIG. 11 is a diagram illustrating an example of the optimal route search result according to the embodiment. The upper figure in FIG. 11 illustrates summary data of the optimal route search result. The lower figure in FIG. 11 illustrates detailed data of the optimal route search result.

[Flowchart of Model Learning Phase]

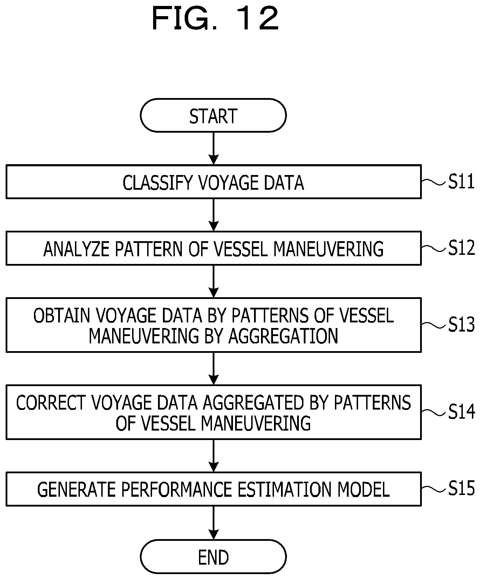

FIG. 12 is a diagram illustrating an example of a flowchart of a model learning phase according to the embodiment.

As illustrated in FIG. 12, the voyage data classification unit 12 classifies the voyage data 21 (step S11), and generates the voyage data 23 for each meteorological and hydrographic condition.

The pattern extraction unit 13 analyzes the pattern of vessel maneuvering from the voyage data 23 for each meteorological and hydrographic condition (step S12). As a result of the analysis, the voyage data aggregation unit 14 aggregates the voyage data 23 for each meteorological and hydrographic condition to obtain the voyage data by patterns of vessel maneuvering (step S13), and saves the voyage data 25 for each pattern. Then, the voyage data aggregation unit 14 corrects the voyage data aggregated by patterns of vessel maneuvering (step S14). Subsequently, the performance estimation model generation unit 15 generates the performance estimation model using the voyage data by patterns (the voyage data 25 for each pattern) (step S15) . Thereafter, the performance estimation model generation unit 15 saves the generated performance estimation model in the performance estimation model 26.

[Usage Example of Navigation Support Processing]

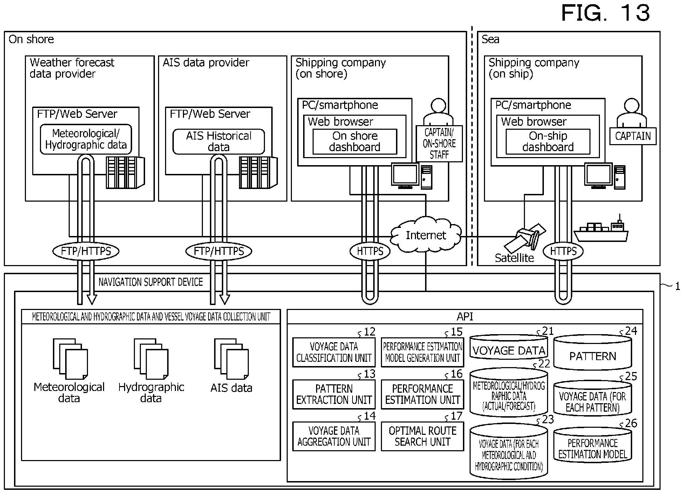

FIG. 13 is a diagram illustrating a usage example of the navigation support processing according to the embodiment. As illustrated in FIG. 13, the navigation support device 1 is connected through a network with a vessel on the sea (Sea) that uses the navigation support processing. The navigation support device 1 is connected through a network with a shipping company (Shipping company) on the shore (on shore). Furthermore, the navigation support device 1 is connected to various providers on the shore (on shore) through networks. Various providers include a provider of weather forecast data (Weather forecast data provider) and a provider of AIS data (AIS data provider).

The navigation support device 1 collects actual and forecast meteorological and hydrographic data from the provider of weather forecast data. The navigation support device 1 collects voyage data from the provider of AIS data. The collected meteorological and hydrographic data and voyage data are reflected in the voyage data 21 and the meteorological/hydrographic data (actual/forecast) 22.

Prior to the navigation, the captain or on-shore staff inquires of the navigation support device 1 about the optimal route. Furthermore, the captain can also inquire of the navigation support device 1 about the optimal route during the navigation.

Upon accepting navigation conditions contained in the inquiry, the navigation support device 1 searches for an optimal route for the section from the departure place to the arrival place of the vessel when the departure is made at the departure time and the specified vessel maneuvering pattern is selected. Then, the navigation support device 1 responds to the inquiry source with the optimal route found by the search. Consequently, the navigation support device 1 can accurately recommend an optimal route according to a vessel maneuvering pattern.

[Effects of Embodiments]

According to the above embodiment, the navigation support device 1 classifies the voyage data 21 according to each meteorological and hydrographic condition. The navigation support device 1 calculates the characteristic distribution of vessel maneuvering for each meteorological and hydrographic condition using the classified voyage data 23. The navigation support device 1 extracts a plurality of vessel maneuvering patterns from the calculated characteristic distribution of vessel maneuvering for each meteorological and hydrographic condition, and aggregates the voyage data for each vessel maneuvering pattern. The navigation support device 1 generates a learning model for each vessel maneuvering pattern from the voyage data aggregated for each vessel maneuvering pattern, using meteorological and hydrographic actual data as the explanatory variable and the vessel performance as the objective variable. According to such a configuration, the navigation support device 1 can accurately recommend an optimal route according to the vessel maneuvering pattern, by using the learning model for the vessel performance for each vessel maneuvering pattern. For example, the navigation support device 1 is allowed to estimate the optimal route that suits the captain's sense by learning the vessel maneuvering actually performed by the captain.

Furthermore, according to the above embodiment, for the characteristic distribution of vessel maneuvering calculated for each meteorological and hydrographic condition, the navigation support device 1 divides the distribution into sections for each vessel maneuvering pattern based on the frequency of occurrence, and aggregates the voyage data of the sections of the distribution for each vessel maneuvering pattern. According to such a configuration, the navigation support device 1 can aggregate the voyage data according to the vessel maneuvering pattern. In particular, the navigation support device 1 can aggregate the voyage data at the normal output by regarding the voyage data of a section with the highest frequency of occurrence as the vessel maneuvering pattern at the normal output, which is often selected by the captain. As a result, the navigation support device 1 can search for an optimal route according to the vessel maneuvering pattern at the normal output.

In addition, according to the above embodiment, the navigation support device 1 estimates the vessel performance in a predetermined vessel maneuvering pattern, using the learning model for the predetermined vessel maneuvering pattern and meteorological and hydrographic prediction data. According to such a configuration, the navigation support device 1 can search for an optimal route for the vessel, based on the vessel performance in the predetermined vessel maneuvering pattern. For example, the navigation support device 1 can search for an optimal route that consumes less fuel and takes less time when the predetermined vessel maneuvering pattern is the pattern at the normal output.

Furthermore, according to the above embodiment, for the characteristic distribution of vessel maneuvering calculated for each meteorological and hydrographic condition, the navigation support device 1 aggregates the vessel voyage data of a section of the distribution with the maximum frequency of occurrence, as data of the vessel maneuvering pattern at the normal output. According to such a configuration, the navigation support device 1 can search for an optimal route according to the vessel maneuvering pattern at the normal output.

[Others]

Note that each illustrated component of the navigation support device 1 is not necessarily physically configured as illustrated in the drawings. For example, specific aspects of separation and integration of the navigation support device 1 are not limited to the illustrated ones, and all or a part of the device can be functionally or physically separated and integrated in an optional unit according to various loads, use states, or the like. For example, the voyage data classification unit 12 and the pattern extraction unit 13 may be integrated as one unit. Furthermore, the voyage data aggregation unit 14 may be split into an aggregation unit that aggregates the voyage data 23 for each meteorological and hydrographic condition to generate the voyage data 25 for each vessel maneuvering pattern, and a correction unit that corrects the voyage data 25 for each vessel maneuvering pattern. In addition, the storage unit 20 may be connected by way of a network as an external device of the navigation support device 1.

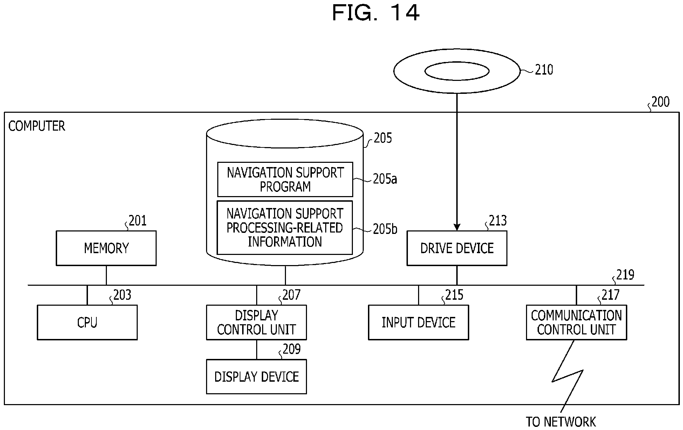

Furthermore, various types of processing described in the above embodiment can be achieved by a computer such as a personal computer or a work station executing programs prepared in advance. Thus, in the following, an example of a computer that executes a navigation support program that achieves functions similar to the functions of the navigation support device 1 illustrated in FIG. 1 will be described. FIG. 14 is a diagram illustrating an example of a computer that executes the navigation support program.

As illustrated in FIG. 14, a computer 200 includes a CPU 203 that executes various types of arithmetic processing, an input device 215 that accepts data input from a user, and a display control unit 207 that controls a display device 209. Furthermore, the computer 200 also includes a drive device 213 that reads a program or the like from a storage medium, and a communication control unit 217 that exchanges data with another computer via a network. In addition, the computer 200 includes a memory 201 that temporarily stores various types of information, and a hard disk drive (HDD) 205. Then, the memory 201, the CPU 203, the HDD 205, the display control unit 207, the drive device 213, the input device 215, and the communication control unit 217 are connected by a bus 219.

The drive device 213 is a device for a removable disk 210, for example. The HDD 205 stores a navigation support program 205a and navigation support processing-related information 205b.

The CPU 203 reads the navigation support program 205a, and loads the navigation support program 205a into the memory 201 to execute the navigation support program 205a as a process. Such a process corresponds to the respective functional units of the navigation support device 1. The navigation support processing-related information 205b corresponds to the voyage data 21, the meteorological/hydrographic data (actual/forecast) 22, the voyage data (for each meteorological and hydrographic condition) 23, the pattern 24, the voyage data (for each pattern) 25, and the performance estimation model 26. Then, for example, the removable disk 210 stores each piece of information such as the navigation support program 205a.

Note that the navigation support program 205a may not necessarily be stored in the HDD 205 from the beginning. For example, the program is stored in a "portable physical medium" such as a flexible disk (FD), a compact disk read only memory (CD-ROM), a digital versatile disk (DVD), a magneto-optical disk, or an integrated circuit (IC) card, which is inserted into the computer 200. Then, the computer 200 may read the navigation support program 205a from these media to execute the navigation support program 205a.

REFERENCE SIGNS LIST

1 navigation support device
10 control unit
11 data collection unit
12 voyage data classification unit
13 pattern extraction unit
14 voyage data aggregation unit
15 performance estimation model generation unit
16 performance estimation unit
17 optimal route search unit
20 storage unit
21 voyage data
22 meteorological/hydrographic data (actual/forecast)
23 voyage data (for each meteorological and hydrographic condition)
24 pattern
25 voyage data (for each pattern)
26 performance estimation model

**Claims**

1. A navigation support method executed by a computer, the navigation support method comprising:

   classifying vessel voyage data according to each meteorological and hydrographic condition;
   calculating characteristic distribution of vessel maneuvering for each meteorological and hydrographic condition, using the vessel voyage data that has been classified;
   extracting a plurality of vessel maneuvering patterns from the characteristic distribution of vessel maneuvering that has been calculated for each meteorological and hydrographic condition, and aggregating the vessel voyage data for each of the vessel maneuvering patterns; and
   generating a learning model for each of the vessel maneuvering patterns from the vessel voyage data aggregated for each of the vessel maneuvering patterns, using meteorological and hydrographic actual data as an explanatory variable and vessel performance as an objective variable.

2. The navigation support method according to claim 1, wherein
   for performance characteristic distribution that indicates the characteristic distribution of vessel maneuvering calculated for each meteorological and hydrographic condition, the aggregating divides the distribution into sections for each of the vessel maneuvering patterns based on a frequency of occurrence, and aggregates the vessel voyage data of the sections of the distribution for each of the vessel maneuvering patterns.

3. The navigation support method according to claim 1, wherein
   vessel performance in a predetermined vessel maneuvering pattern is estimated using the learning model for the predetermined vessel maneuvering pattern and meteorological and hydrographic prediction data.

4. The navigation support method according to claim 2, wherein
   for the characteristic distribution of vessel maneuvering calculated for each meteorological and hydrographic condition, the aggregating aggregates the vessel voyage data of a section of the distribution with a maximum frequency of occurrence, as data of one of the vessel maneuvering patterns at a normal output.

5. A navigation support device comprising:

   a classification unit configured to classify vessel voyage data according to each meteorological and hydrographic condition;
   a calculation unit configured to calculate characteristic distribution of vessel maneuvering for each meteorological and hydrographic condition, using the vessel voyage data that has been classified;
   an extraction unit configured to extract a plurality of vessel maneuvering patterns from the characteristic distribution of vessel maneuvering that has been calculated for each meteorological and hydrographic condition;
an aggregation unit configured to aggregate the vessel voyage data for each of the vessel maneuvering patterns; and
a generation unit configured to generate a learning model for each of the vessel maneuvering patterns from the vessel voyage data aggregated for each of the vessel maneuvering patterns, using meteorological and hydrographic actual data as an explanatory variable and vessel performance as an objective variable.

6. A navigation support program causing a computer to execute processing, the processing comprising:

classifying vessel voyage data according to each meteorological and hydrographic condition;
calculating characteristic distribution of vessel maneuvering for each meteorological and hydrographic condition, using the vessel voyage data that has been classified;
extracting a plurality of vessel maneuvering patterns from the characteristic distribution of vessel maneuvering that has been calculated for each meteorological and hydrographic condition, and aggregating the vessel voyage data for each of the vessel maneuvering patterns; and
generating a learning model for each of the vessel maneuvering patterns from the vessel voyage data aggregated for each of the vessel maneuvering patterns, using meteorological and hydrographic actual data as an explanatory variable and vessel performance as an objective variable.

# FIG. 1

# FIG. 2

VOYAGE DATA FOR
EACH PATTERN 21'

PERFORMANCE
ESTIMATION MODEL
FOR EACH PATTERN 26

PATTERN a
(NORMAL OUTPUT)

<2>

<3>

Speed

DISTRIBUTION OF
VESSEL SPEED

PATTERN b
(slow x1)

Speed

21

<1>

VOYAGE DATA

PATTERN c
(slow x2)

Speed

Frequency

0                    30knot

METEOROLOGICAL/
HYDROGRAPHIC
DATA (ACTUAL)

22

# FIG. 3

21

| ... | imo | vessel_na | ... | eta | draught | ... | LONGITUDE | LATITUDE | sog (SPEED) | cog (TRAVELING DIRECTION) | ... |
|---|---|---|---|---|---|---|---|---|---|---|---|
| | 1234567 | maru | | 8/10/2018 10:00 | 13.8 | | 102.8126 | -19.5776 | 11.1 | 133 | |
| | 1234567 | maru | | 8/10/2018 10:00 | 13.8 | | 102.8809 | -19.6438 | 11 | 135.1 | |
| | 1234567 | maru | | 8/10/2018 10:00 | 13.8 | | 102.8809 | -19.6438 | 11 | 135.1 | |

| heading (BOW DIRECTION) | ... | dt_pos_utc (TIME) | ... |
|---|---|---|---|
| 135 | | 7/31/2018 2:12 | |
| 137 | | 7/31/2018 2:17 | |
| 137 | | 7/31/2018 2:22 | |

# FIG. 4

22

WIND DATA

| FORECAST DELIVERY DATE AND TIME | TARGET DATE AND TIME | LATITUDE | LONGITUDE | WIND SPEED | WIND DIRECTION |
|---|---|---|---|---|---|
| 02/01/2018 00:00 | 02/02/2018 00:00 | 40.5 | 135.5 | 5.46 | 10 |
| 02/01/2018 00:00 | 02/02/2018 00:00 | 40.5 | 140.0 | 5.98 | 20 |
| 02/01/2018 00:00 | 02/02/2018 00:00 | 40.5 | 140.5 | 6.96 | 15 |

WAVE DATA

| FORECAST DELIVERY DATE AND TIME | TARGET DATE AND TIME | LATITUDE | LONGITUDE | WAVE HEIGHT | WAVE DIRECTION | WAVE PERIOD |
|---|---|---|---|---|---|---|
| 02/01/2018 00:00 | 02/03/2018 06:00 | 40.5 | 135.5 | 4.88 | 300 | 12.2 |
| 02/01/2018 00:00 | 02/03/2018 06:00 | 40.5 | 140.0 | 4.29 | 290 | 12.2 |
| 02/01/2018 00:00 | 02/03/2018 06:00 | 40.5 | 140.5 | 3.89 | 290 | 11.2 |

OCEAN CURRENT DATA

| FORECAST DELIVERY DATE AND TIME | TARGET DATE AND TIME | LATITUDE | LONGITUDE | OCEAN CURRENT SPEED | OCEAN CURRENT DIRECTION | LAYER |
|---|---|---|---|---|---|---|
| 02/01/2018 00:00 | 02/04/2018 12:00 | 40.5 | 135.5 | 0.080 | 120 | 1 |
| 02/01/2018 00:00 | 02/04/2018 12:00 | 40.5 | 140.0 | 0.087 | 130 | 1 |
| 02/01/2018 00:00 | 02/04/2018 12:00 | 40.5 | 140.5 | 0.093 | 125 | 1 |

# FIG. 5

VOYAGE DATA FOR EACH
METEOROLOGICAL
AND HYDROGRAPHIC
CONDITION

METEOROLOGICAL AND
HYDROGRAPHIC
CONDITION 23

21

VOYAGE DATA

WIND FORCE 0

WIND FORCE 1、FORWARD

WIND FORCE 1、BACKWARD

...

WIND FORCE 10、
BACKWARD ON PORT SIDE

FIG. 6

VOYAGE DATA FOR EACH
METEOROLOGICAL AND
HYDROGRAPHIC
CONDITION 23

FREQUENCY

0                30knot

WIND FORCE 0

DATA OF SECTION WITH
HIGHEST FREQUENCY IS
REGARDED AS NORMAL
OUTPUT

VOYAGE DATA FOR
EACH PATTERN 25

VOYAGE DATA AT
NORMAL OUTPUT

PATTERN a
(NORMAL
OUTPUT)

FREQUENCY

0                30knot

WIND FORCE 0、
FORWARD
WIND FORCE 1、
FORWARD

VOYAGE DATA AT
MEDIUM OUTPUT

PATTERN b
(slow x1)

FREQUENCY

0                30knot

DATA IS AGGREGATED
FOR EACH PEAK

VOYAGE DATA AT
SMALL OUTPUT

PATTERN c
(slow x2)

VOYAGE DATA AT
HIGH OUTPUT

PATTERN d
(high)

18

# FIG. 7

| BEFORE CORRECTION | CORRECTION | AFTER CORRECTION |
|---|---|---|

VOYAGE DATA
(DATA FOR EVERY
ONE MINUTE)

VOYAGE DATA FOR
EACH PATTERN25

VOYAGE DATA
(DATA FOR EVERY
ONE MINUTE)

PATTERN a
(NORMAL OUTPUT)

Speed

d1'

d1 d2

PATTERN b
(slow x1)

Speed

d1' d2'

○ PATTERN a
◎ PATTERN b
⊘ PATTERN c

PATTERN c
(slow x2)

Speed

d2'

# FIG. 8

VOYAGE DATA FOR
EACH PATTERN 25

PERFORMANCE ESTIMATION
MODEL FOR EACH PATTERN26

PATTERN a
(NORMAL OUTPUT)

PATTERN b
(slow x1)

PATTERN c
(slow x2)

LEARNING

PERFORMANCE
ESTIMATION
MODEL

PATTERN a
(NORMAL OUTPUT)

PERFORMANCE
ESTIMATION
MODEL

PATTERN b
(slow x1)

PERFORMANCE
ESTIMATION
MODEL

PATTERN c
(slow x2)

22

METEOROLOGICAL/HY
DROGRAPHIC DATA
(ACTUAL)

# FIG. 9

REGRESSION LINE

$$y = \beta_0 + \beta_1 x_1$$

FIG. 10

NAVIGATION CONDITIONS
· DEPARTURE PLACE, ARRIVAL PLACE
· DEPARTURE TIME
· PATTERN
(ENTIRE ROUTE, SPECIFIED SECTION)

S100

OPTIMAL ROUTE
FOR EACH
PATTERN

S130

PATTERN b     PATTERN a

ROUTE OPTIMIZATION

PATTERN
METEOROLOGICAL AND
HYDROGRAPHIC FORECAST DATA

PERFORMANCE
ESTIMATION MODEL
FOR EACH PATTERN

S110

S120

VESSEL
PERFORMANCE
· VESSEL SPEED
· FUEL CONSUMPTION

Optimal
(slow x1)

Optimal
(normal)

Optimal
(slow x2)

3000km   7 Day 12 hours   495.5L

PATTERN c

PATTERN a
(NORMAL
OUTPUT)

PERFORMANCE
ESTIMATION
MODEL

PATTERN b
(slow x1)

PERFORMANCE
ESTIMATION
MODEL

PATTERN c
(slow x2)

PERFORMANCE
ESTIMATION
MODEL

PERFORMANCE ESTIMATION

## FIG. 11

■OPTIMAL ROUTE SEARCH RESULT (SUMMARY DATA)

| ROUTE ID | ROUTE NAME | VESSEL ID | VESSEL NAME | DEPARTURE DATE AND TIME | PREDICTED ARRIVAL DATE AND TIME | NAVIGATION DISTANCE | AVERAGE VESSEL SPEED OVER GROUND | AVERAGE VESSEL SPEED OVER WATER | CONSUMED FUEL | ... |
|---|---|---|---|---|---|---|---|---|---|---|
| 1 | JAPAN-LOS ANGELES | 100 | FUJITSU MARU | 02/01/2018 00:00 | 02/13/2018 12:00 | 4623.2 | 14.3 | 14.0 | 756.4 | |
| 2 | LOS ANGELES-JAPAN | 100 | FUJITSU MARU | 02/14/2018 00:00 | 02/28/2018 00:00 | 4701.0 | 14.3 | 14.6 | 764.5 | |
| 3 | JAPAN-SINGAPORE | 101 | KENKYUJO MARU | 02/01/2018 00:00 | 02/13/2018 12:00 | 3987.6 | 13.3 | 13.4 | 645.6 | |

■OPTIMAL ROUTE SEARCH RESULT (DETAILED DATA)

| ROUTE ID | DETAIL ID | DATE AND TIME | LATITUDE | LONGITUDE | VESSEL SPEED OVER GROUND | VESSEL SPEED OVER WATER | WIND SPEED | WIND DIRECTION | WAVE HEIGHT | WAVE DIRECTION | OCEAN CURRENT SPEED | OCEAN CURRENT DIRECTION | CONSUMED FUEL | ... |
|---|---|---|---|---|---|---|---|---|---|---|---|---|---|---|
| 1 | 1 | 02/01/2018 00:00 | 34.772 | 139.689 | 14.6 | 14.5 | 5.46 | 10 | 4.88 | 20 | 0.080 | 30 | 0.00 | |
| 1 | 2 | 02/01/2018 01:00 | 34.892 | 139.928 | 14.5 | 14.6 | 5.98 | 20 | 4.29 | 25 | 0.087 | 40 | 2.52 | |
| 1 | 3 | 02/01/2018 02:00 | 35.012 | 140.169 | 14.7 | 14.6 | 6.96 | 15 | 3.89 | 10 | 0.093 | 20 | 5.05 | |

# FIG. 12

```
        ┌─────────────┐
        │    START    │
        └─────────────┘
               │
               ▼
┌─────────────────────────────────────┐
│        CLASSIFY VOYAGE DATA          │──S11
└─────────────────────────────────────┘
               │
               ▼
┌─────────────────────────────────────┐
│  ANALYZE PATTERN OF VESSEL MANEUVERING │──S12
└─────────────────────────────────────┘
               │
               ▼
┌─────────────────────────────────────┐
│   OBTAIN VOYAGE DATA BY PATTERNS OF VESSEL │──S13
│      MANEUVERING BY AGGREGATION       │
└─────────────────────────────────────┘
               │
               ▼
┌─────────────────────────────────────┐
│  CORRECT VOYAGE DATA AGGREGATED BY PATTERNS │──S14
│       OF VESSEL MANEUVERING          │
└─────────────────────────────────────┘
               │
               ▼
┌─────────────────────────────────────┐
│  GENERATE PERFORMANCE ESTIMATION MODEL │──S15
└─────────────────────────────────────┘
               │
               ▼
        ┌─────────────┐
        │     END     │
        └─────────────┘
```

FIG. 13

On shore

**Weather forecast data provider**

FTP/Web Server

Meteorological/ Hydrographic data

**AIS data provider**

FTP/Web Server

AIS Historical data

**Shipping company (on shore)**

PC/smartphone

Web browser

On shore dashboard

CAPTAIN/ ON-SHORE STAFF

Sea

**Shipping company (on ship)**

PC/smartphone

Web browser

On-ship dashboard

CAPTAIN

FTP/HTTPS

FTP/HTTPS

HTTPS

Internet

Satellite

HTTPS

NAVIGATION SUPPORT DEVICE

~1

METEOROLOGICAL AND HYDROGRAPHIC DATA AND VESSEL VOYAGE DATA COLLECTION UNIT

Meteorological data

Hydrographic data

AIS data

API

VOYAGE DATA CLASSIFICATION UNIT ⌐12

PERFORMANCE ESTIMATION MODEL GENERATION UNIT ⌐15

VOYAGE DATA ⌐21

PATTERN ⌐24

PATTERN EXTRACTION UNIT ⌐13

PERFORMANCE ESTIMATION UNIT ⌐16

METEOROLOGICAL/HYDROGRAPHIC DATA (ACTUAL/FORECAST) ⌐22

VOYAGE DATA (FOR EACH PATTERN) ⌐25

VOYAGE DATA AGGREGATION UNIT ⌐14

OPTIMAL ROUTE SEARCH UNIT ⌐17

VOYAGE DATA (FOR EACH METEOROLOGICAL AND HYDROGRAPHIC CONDITION) ⌐23

PERFORMANCE ESTIMATION MODEL ⌐26

# FIG. 14

```
                                               ⌒210
                                                            ⌒200
COMPUTER
                        ⌒205
         ┌─────────────────────────┐
         │ NAVIGATION SUPPORT      │⌒205a
         │        PROGRAM          │
         ├─────────────────────────┤
         │ NAVIGATION SUPPORT      │
         │ PROCESSING-RELATED      │⌒205b
         │     INFORMATION         │
    ⌒201 └─────────────────────────┘          ⌒213
  ┌──────────┐                          ┌──────────────┐
  │  MEMORY  │                          │ DRIVE DEVICE │
  └──────────┘                          └──────────────┘
                                                              ⌒219
  ────────┬──────────────┬────────────────┬───────────┬──────
     ⌒203 │         ⌒207 │           ⌒215 │      ⌒217 │
  ┌────────┐   ┌──────────────┐   ┌──────────────┐   ┌──────────────┐
  │  CPU   │   │   DISPLAY    │   │ INPUT DEVICE │   │ COMMUNICATION│
  └────────┘   │ CONTROL UNIT │   └──────────────┘   │ CONTROL UNIT │
               └──────────────┘                      └──────────────┘
                        ⌒209
               ┌──────────────┐
               │DISPLAY DEVICE│
               └──────────────┘
                                                      TO NETWORK
```

## INTERNATIONAL SEARCH REPORT

| | International application No. |
|---|---|
| | PCT/JP2018/047100 |

**A. CLASSIFICATION OF SUBJECT MATTER**
Int.Cl. G01C21/20(2006.01)i, G08G3/00(2006.01)i, B63H25/04(2006.01)i,
B63H21/21(2006.01)i

According to International Patent Classification (IPC) or to both national classification and IPC

**B. FIELDS SEARCHED**

Minimum documentation searched (classification system followed by classification symbols)
Int.Cl. G01C21/20, G08G3/00, B63H25/04, B63H21/21

Documentation searched other than minimum documentation to the extent that such documents are included in the fields searched
Published examined utility model applications of Japan 1922-1996
Published unexamined utility model applications of Japan 1971-2019
Registered utility model specifications of Japan 1996-2019
Published registered utility model applications of Japan 1994-2019

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | WO 2011/055512 A1 (KAWASAKI HEAVY IND LTD.) 12 May 2011, claims, paragraphs [0031]-[0088]<br>& US 2012/0259489 A1, claims, paragraphs [0063]-[0119]<br>& EP 2498056 A1 | 1-6 |
| Y | JP 2001-291200 A (MITSUBISHI HEAVY INDUSTRIES, LTD.) 19 October 2001, claims, paragraphs [0034]-[0054] (Family: none) | 1-6 |

☒ Further documents are listed in the continuation of Box C.    ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 15.03.2019 | 26.03.2019 |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

**INTERNATIONAL SEARCH REPORT**

International application No.

PCT/JP2018/047100

C (Continuation).    DOCUMENTS CONSIDERED TO BE RELEVANT

| Category* | Citation of document, with indication, where appropriate, of the relevant passages | Relevant to claim No. |
|---|---|---|
| Y | JP 2015-520698 A (ABB TECHNOLOGY AG) 23 July 2015, claims, paragraphs [0016]-[0043], [0066]-[0081] & US 2015/0149136 A1, claims, paragraphs [0015]-[0042], [0066]-[0081] & WO 2013/178780 A1 & EP 2669173 A1 & CN 104507792 A & KR 10-2015-0021971 A | 1-6 |
| A | JP 2009-286230 A (MITSUI ENG & SHIPBUILD CO., LTD.) 10 December 2009, entire text (Family: none) | 1-6 |
| A | JP 2013-104690 A (MITSUI ENG & SHIPBUILD CO., LTD.) 30 May 2013, entire text (Family: none) | 1-6 |
| A | JP 62-274500 A (NKK CORP.) 28 November 1987, entire text (Family: none) | 1-6 |
| A | JP 2015-523557 A (ABB TECHNOLOGY AG) 13 August 2015, entire text & US 2015/0149074 A1, entire text & WO 2013/178779 A1 & EP 2669630 A1 & CN 104508427 A & KR 10-2015-0018610 A | 1-6 |
| A | JP 2011-512512 A (INTEGRATED POWER TECHNOLOGY CORPORATION) 21 April 2011, entire text & US 2011/0172852 A1, entire text & US 2009/0132101 A1 & US 2010/0198429 A1 & US 2013/0060402 A1 & WO 2009/067339 A2 & JP 5398730 B2 | 1-6 |

Form PCT/ISA/210 (continuation of second sheet) (January 2015)

**EP 3 901 580 A1**

**Patent documents cited in the description**

- JP 6281022 B

- JP 2013134089 A